# DEMANDE DE BREVET EUROPEEN

(11) **EP 0 635 857 A1**
(43) Date de publication de la demande: **25.01.1995**
(21) Numéro de dépôt: 94401658.3
(22) Date de dépôt: 19.07.1994
(51) Int. Cl.: H01G 4/22, H01G 13/04

(54) **Condensateur de puissance de type semi-imprégné**

(30) Priorité: 20.07.1993 FR 9308890
(71) Demandeur: COMPAGNIE EUROPEENNE DE COMPOSANTS ELECTRONIQUES LCC, F-92400 Courbevoie (FR)
(72) Inventeur: Terzulli, Gilles, Thomson-CSF, F-92402 Courbevoie Cedex (FR)
(74) Mandataire: Guérin, Michel

(57) **Abrégé**

L'invention concerne un condensateur de puissance de type imprégné ainsi que le procédé de fabrication d'un tel condensateur. Le condensateur de puissance est constitué d'au moins un élément capacitif (3) obtenu par bobinage compact d'au moins deux films plastiques métallisés. Le liquide d'imprégnation n'est localisé qu'entre les enroulements définis par le bobinage des films. Le dépôt de liquide d'imprégnation est réalisé en contrôlant la quantité de liquide déposé et les éléments capacitifs, une fois leur câblage réalisé, sont enrobés d'une résine thermodurcissable (19).

## Description

La présente invention concerne les condensateurs de puissance de type imprégné ainsi que le procédé de fabrication de tels condensateurs.

Les condensateurs de puissance sont à l'heure actuelle de type sec ou de type imprégné.

Les condensateurs de type sec sont constitués d'au moins un élément capacitif, chaque élément capacitif étant obtenu, par exemple, par le bobinage d'au moins deux films plastiques métallisés. L'inconvénient de ce type de condensateur est la présence d'une pellicule d'air entre les enroulements de chaque élément capacitif.

Le gradient de tension applicable au condensateur se trouve alors limité afin d'éviter les claquages éventuels.

Afin de pallier cette limitation la technologie de type imprégné a été développée. Les différents éléments capacitifs constituant le condensateur baignent alors dans un liquide d'imprégnation.

Ce liquide introduit entre les enroulements de chaque élément capacitif, soit lors de la phase de bobinage, soit une fois le bobinage terminé, permet alors au condensateur de supporter des tensions plus élevées.

L'énergie volumique du condensateur s'en trouve améliorée. Cependant ce type de condensateur présente des inconvénients.

Les films plastiques utilisés sont rugueux et le bobinage s'effectue de manière lâche sur des machines à fonctionnement manuel de façon à contrôler l'espace entre les enroulements.

Un autre inconvénient consiste à nécessiter une quantité importante de liquide d'imprégnation pouvant aller jusqu'à quelques dizaines de pour-cent du volume total du condensateur mis en boîtier. Le liquide d'imprégnation étant inflammable, il est alors nécessaire d'utiliser des boîtiers coûteux afin d'éviter les risques de fuite. Du fait des dangers qu'une fuite de liquide d'imprégnation peut faire courir, certaines normes de sécurité interdisent l'utilisation des condensateurs imprégnés en milieu sous-terrain (métro, mines, ...).

La présente invention ne présente pas ces inconvénients.

L'invention concerne un condensateur de puissance de type imprégné, ledit condensateur étant constitué d'au moins un élément capacitif obtenu par bobinage d'au moins deux films plastiques métallisés, caractérisé en ce que le liquide d'imprégnation n'est localisé qu'entre les enroulements définis pas les films plastiques métallisés.

L'invention concerne également un procédé de fabrication d'un tel condensateur.

Un avantage de l'invention est donc d'éviter le danger de fuite du liquide d'imprégnation.

D'autres caractéristiques et avantages apparaîtront à la lecture d'un mode de réalisation préférentiel de l'invention fait avec référence aux figures ci-annexées dans lesquelles :
- la figure 1 représente un schéma synoptique de principe du procédé selon le mode de réalisation préférentiel de l'invention,
- la figure 2 représente un premier dispositif permettant de déposer le liquide d'imprégnation sur un film plastique métallisé selon le mode de réalisation préférentiel de l'invention,
- la figure 3 représente un deuxième dispositif permettant de déposer le liquide d'imprégnation sur un film plastique métallisé selon un deuxième mode de réalisation de l'invention,
- la figure 4 représente la vue en coupe de deux feuilles plastiques métallisées superposées selon le mode de réalisation préférentiel de l'invention,
- la figure 5 représente un élément capacitif selon le mode de réalisation préférentiel de l'invention,
- la figure 6 représente un condensateur selon le mode de réalisation préférentiel de l'invention.

Sur toutes les figures, les mêmes repères désignent les mêmes éléments.

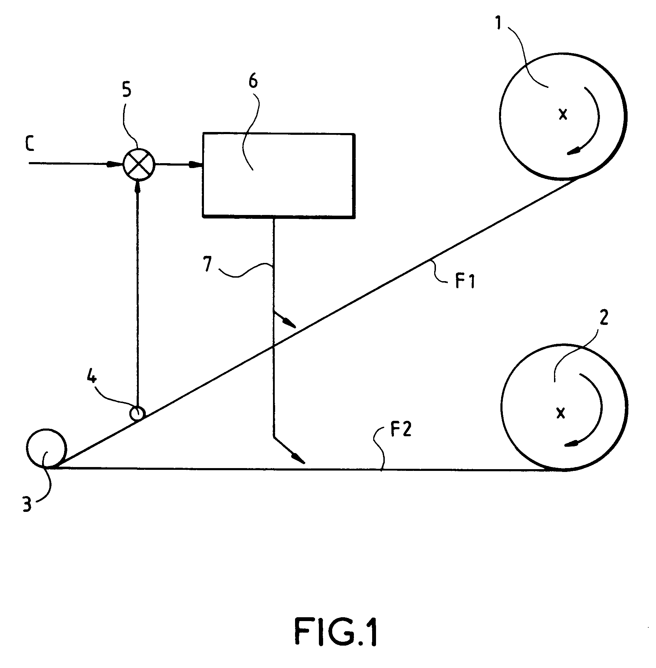

La figure 1 représente un schéma synoptique de principe du procédé selon le mode de réalisation préférentiel de l'invention.

Deux galettes de films 1 et 2 sont déroulées à la même vitesse de façon à constituer un élément capacitif 3.

De façon préférentielle, les films F1 et F2, issus respectivement des galettes 1 et 2, sont des films plastiques métallisés sur une seule de leur face. Le film plastique est un film de polyester, polycarbonate, polysulfone, polyprolylène ou similaires et la métallisation des films plastiques est réalisée à l'aide d'un métal choisi parmi l'aluminium, le zinc, les alliages contenant de l'aluminium, du zinc, du chrome ou similaires.

La métallisation des films plastiques peut être uniforme. Elle peut aussi présenter un crénelage formé de démétallisations locales afin d'améliorer les problèmes d'auto-cicatrisation.

Selon l'invention, la quantité de liquide d'imprégnation déposé est contrôlée par la vitesse d'enroulement de l'élément capacitif. Un capteur 4, placé sur l'un des deux films, permet de détecter la vitesse d'enroulement des films. Cette information de vitesse est envoyée sur un comparateur 5 qui reçoit, par ailleurs, une consigne de quantité d'huile C. Le signal issu du comparateur 5 est alors envoyé dans un dispositif d'asservissement 6 permettant d'ajuster la quantité d'huile déposée en fonction de la vitesse détectée. Le liquide d'imprégnation est déposé par l'intermédiaire d'un dispositif 7 sur chacun des films F1 et F2. Le contrôle de la quantité de liquide d'imprégnation permet de calibrer avec précision l'épaisseur du liquide et la largeur L sur laquelle le liquide est étalé. Selon l'invention, la tension constante appliquée aux films est ajustée de façon à réaliser des éléments capacitifs compacts.

De façon préférentielle, le liquide est déposé sur la face non métallisée du film plastique métallisé.

Comme cela a été mentionné précédemment, un élément capacitif 3 est réalisé, selon le mode préférentiel, par enroulement de deux films plastiques métallisés sur une seule de leur face. Cependant, l'invention concerne également des éléments capacitifs réalisés par enroulement de feuilles de films plastiques non métallisés et de feuilles de films entièrement métalliques. Selon ce mode de réalisation le liquide d'imprégnation est alors déposé sur les deux faces non métallisées des feuilles de films plastiques.

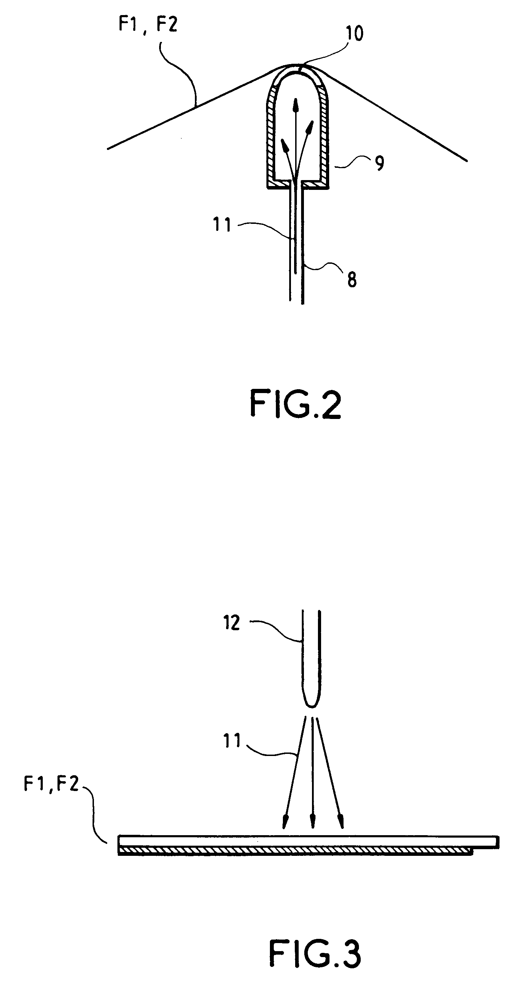

La figure 2 représente un premier dispositif permettant de déposer le liquide d'imprégnation sur un film plastique métallisé selon le mode de réalisation préférentiel de l'invention.

Ce dispositif est constitué d'un tube 8 à l'extrémité duquel est placé un patin 9. Le liquide d'imprégnation 11 est amené à la pression désirée à l'intérieur du patin 9 dont la partie supérieure 10, qui est en contact avec le film plastique métallisé, est poreuse. Le liquide d'imprégnation est alors déposé à la bonne épaisseur sur la largeur désirée. Comme cela a été mentionné précédemment le dépôt de liquide d'imprégnation est effectué sur la face plastique du film F1, F2.

La figure 3 représente un deuxième dispositif permettant de déposer le liquide d'imprégnation sur un film plastique métallisé selon un deuxième mode de réalisation de l'invention.

Le liquide d'imprégnation 11 est projeté sur la face plastique du film F1, F2 à l'aide d'une aiguille 12. Selon l'invention la quantité de liquide déposé est ajustée de façon à garantir audit liquide une épaisseur et un étalement désiré lors de l'enroulement.

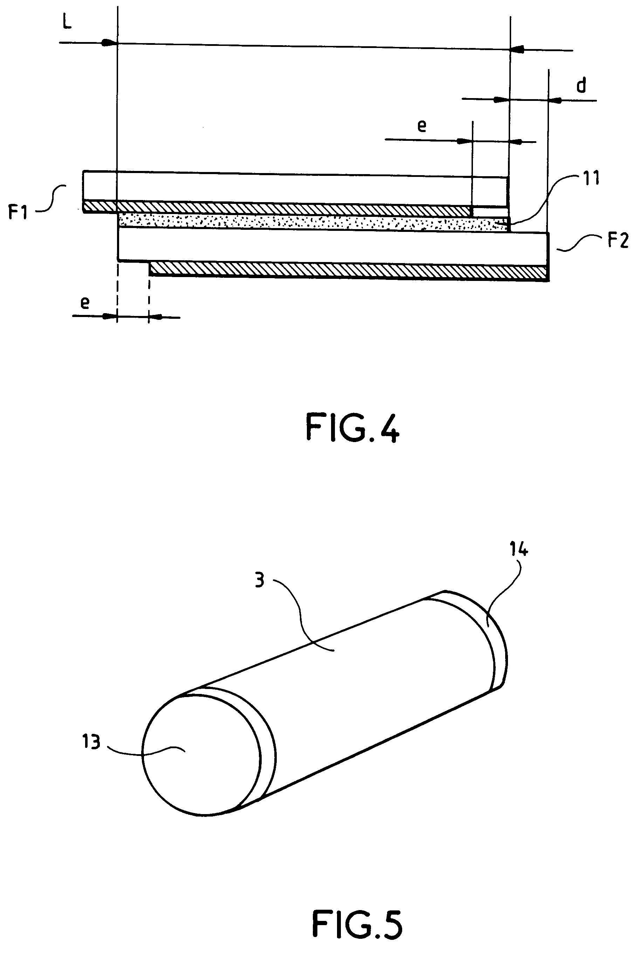

La figure 4 représente la vue en coupe de deux feuilles de film plastique métallisé superposées selon le mode de réalisation préférentiel de l'invention.

Sur cette figure sont représentés les deux films plastiques, une fois le bobinage effectué. Selon le mode de réalisation préférentiel de l'invention, les films plastiques F1, F2 sont des films lisses.

Comme cela est connu de l'homme de l'art les deux films F1 et F2 ont des marges latérales non métallisées de largeur e et sont décalés l'un par rapport à l'autre d'une distance d de façon à assurer correctement l'opération ultérieure de shoopage. Un avantage du mode de réalisation préférentiel de l'invention est d'ajuster en une seule fois la largeur L sur laquelle le liquide d'imprégnation est étalé de façon à conserver dégagées de tout liquide d'imprégnation les seules zones où sera effectuée l'opération ultérieure de shoopage.

Cependant, l'invention concerne également un mode de réalisation où la largeur L n'est pas ajustée du seul fait du bobinage des films.

Cet ajustement est alors réalisé, après l'opération de shoopage, par immersion de l'élément capacitif dans un liquide d'imprégnation de même nature que celui utilisé lors du bobinage.

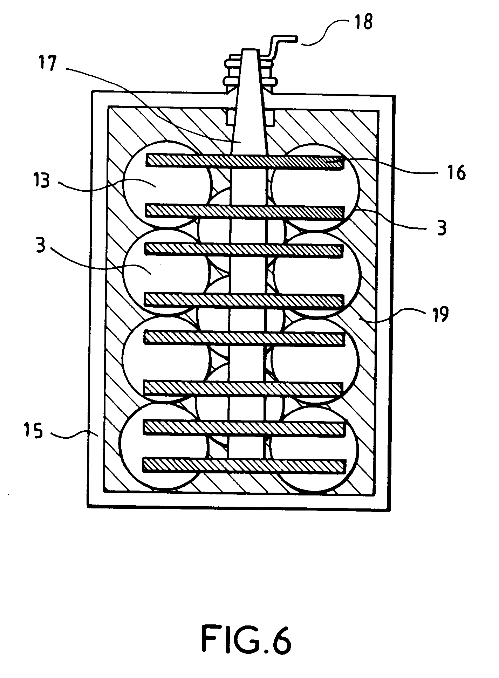

La figure 5 représente la vue en perspective d'un élément capacitif selon le mode de réalisation préférentiel de l'invention.

L'élément capacitif 3 a une section circulaire. Les faces latérales 13 et 14 de chaque élément capacitif sont recouvertes par un métal, par exemple le zinc, ou par tout alliage métallique connu de l'homme de l'art. Cette métallisation des faces latérales est effectuée par shoopage. Comme cela a été mentionné précédemment, le bobinage des films est effectué de façon à calibrer avec précision l'épaisseur du liquide d'imprégnation et la largeur sur laquelle le liquide est étalé. Il en résulte un élément capacitif compact dans lequel le liquide d'imprégnation est retenu entre les enroulements.

La figure 6 représente un condensateur selon le mode de réalisation préférentiel de l'invention. C'est une vue permettant de montrer le câblage des éléments capacitifs 3 dans un même boîtier 15. Les éléments capacitifs 3 sont empilés de façon à présenter une première moitié de leurs faces latérales 13 sur un premier côté et une seconde moitié de leurs faces latérales sur un second côté, non représenté sur la figure.

Les faces latérales situées d'un même côté sont reliées entre elles à l'aide d'éléments de liaison 16, lesquels sont reliés à un même clinquant 17 lui-même relié à une borne de connexion 18.

Une résine thermodurcissable 19, de même nature que celle employée dans les condensateurs de type sec, enrobe les éléments capacitifs de façon à assurer une excellente fiabilité au condensateur.

Selon l'art antérieur, les éléments capacitifs baignent dans un liquide d'imprégnation destiné à s'introduire dans les jeux laissés par un bobinage lâche. La pénétration du liquide d'imprégnation dans les jeux du bobinage s'effectue sous vide pendant un cycle de plusieurs jours, comme cela est connu de l'homme de l'art.

Le liquide d'imprégnation étant inflammable, il est nécessaire que les boîtiers aient une étanchéité très grande. lls sont alors coûteux.

Selon l'invention, les éléments capacitifs sont compacts. Il n'est plus nécessaire que les éléments capacitifs baignent dans un liquide d'imprégnation. Les boîtiers contenant les éléments capacitifs n'ont donc plus à assurer une étanchéité d'un niveau aussi élevé que dans l'art antérieur. Un avantage de l'invention est alors de permettre la réalisation de boîtiers moins coûteux.

## Revendications

1. Condensateur de puissance constitué d'au moins un élément capacitif (3) réalisé par bobinage d'au moins deux films plastiques métallisés (F1, F2), chaque élément capacitif contenant un liquide d'imprégnation (11) entre les enroulements définis par le bobinage des films plastiques métallisés, caractérisé en ce qu'il ne comprend de liquide d'imprégnation nulle part ailleurs qu'entre lesdits enroulements.

2. Condensateur de puissance selon la revendication 1, caractérisé en ce que les films plastiques (F1, F2) sont lisses et en ce que les éléments capacitifs (3) sont des éléments compacts dans lesquels le liquide d'imprégnation est retenu entre les enroulements.

3. Condensateur de puissance selon la revendication 2, caractérisé en ce que les éléments capacitifs (3) sont enrobés dans une résine thermodurcissable (19).

4. Condensateur de puissance selon l'une quelconque des revendications précédentes, caractérisé en ce que la métallisation des films plastiques (F1, F2) présente un crénelage formé de démétallisations locales.

5. Procédé de fabrication de condensateur de puissance comprenant les étapes suivantes:
- réalisation d'éléments capacitifs (3) par bobinage d'au moins deux films plastiques métallisés (F1, F2),
- dépôt de liquide d'imprégnation sur chacun des films plastiques métallisés lors du bobinage,
- shoopage des éléments capacitifs,
- câblage des éléments capacitifs de façon à constituer le futur condensateur,
- mise en boîtier des éléments capacitifs,
caractérisé en ce que le bobinage des films plastiques métallisés est effectué de façon à calibrer l'épaisseur du liquide d'imprégnation et la largeur sur laquelle le liquide est étalé, en ce que le dépôt de liquide d'imprégnation est réalisé en contrôlant la quantité de liquide déposé et en ce que, après la mise en boîtier, les éléments capacitifs (3) sont enrobés d'une résine thermodurcissable (19).

6. Procédé selon la revendication 5, caractérisé en ce que le contrôle de la quantité de liquide d'imprégnation déposé est réalisé par un dispositif d'asservissement (6) utilisant l'information de vitesse de bobinage des films (F1, F2).

7. Procédé selon la revendication 6, caractérisé en ce que le liquide d'imprégnation (11) est déposé à l'aide d'un patin (9) dont la partie supérieure (10), poreuse, est en contact avec le film, ledit liquide arrivant dans le patin à la pression désirée par l'intermédiaire d'un tuyau (8).

8. Procédé selon la revendication 6, caractérisé en ce que le liquide d'imprégnation (11) est déposé à l'aide d'une aiguille (12) par projection dudit liquide sur le film plastique métallisé.

9. Procédé selon l'une quelconque des revendications 7 ou 8, caractérisé en ce que le dépôt de liquide d'imprégnation est effectué sur la face non métallisée du film plastique métallisé.
